(19) **Europäisches Patentamt**
**European Patent Office**
**Office européen des brevets**

(11) **EP 2 612 843 B1**

(12) **EUROPEAN PATENT SPECIFICATION**

(45) Date of publication and mention
of the grant of the patent:
**08.07.2015 Bulletin 2015/28**

(51) Int Cl.:
***C03C 27/12*** *(2006.01)* ***B32B 17/10*** *(2006.01)*
***C08J 5/18*** *(2006.01)*

(21) Application number: **11821931.0**

(22) Date of filing: **01.09.2011**

(86) International application number:
**PCT/JP2011/069928**

(87) International publication number:
**WO 2012/029916 (08.03.2012 Gazette 2012/10)**

(54) **INTERLAYER FILM FOR LAMINATED GLASS, AND LAMINATED GLASS**

ZWISCHENSCHICHTFOLIE FÜR LAMINIERTES GLAS UND LAMINIERTES GLAS

FILM INTER-COUCHE POUR VERRE FEUILLETÉ, ET VERRE FEUILLETÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2010 JP 2010195405**

(43) Date of publication of application:
**10.07.2013 Bulletin 2013/28**

(60) Divisional application:
**15165549.5**

(73) Proprietor: **Sekisui Chemical Co., Ltd.**
**Osaka 530-8565 (JP)**

(72) Inventors:
• **YAMAMOTO, Satoru**
**Kouka-shi**
**Shiga 528-8585 (JP)**

• **YOSHIDA, Takeshi**
**Kouka-shi**
**Shiga 528-8585 (JP)**
• **FUKUI, Daishun**
**Kouka-shi**
**Shiga 528-8585 (JP)**
• **YAMAGATA, Tetsuya**
**Kouka-shi**
**Shiga 528-8585 (JP)**

(74) Representative: **Ter Meer Steinmeister & Partner**
**Patentanwälte mbB**
**Mauerkircherstrasse 45**
**81679 München (DE)**

(56) References cited:
**EP-A1- 2 017 237        WO-A1-91/06031**
**WO-A1-2010/035031     JP-A- 2002 103 455**
**JP-A- 2005 187 271      JP-A- 2008 532 917**
**US-A1- 2006 210 776**

**Description**

**TECHNICAL FIELD**

The present invention relates to an intermediate film for laminated glass favorably used in a head-up display. More specifically, the present invention relates to an intermediate film for laminated glass which allows, in a laminated glass, improvement in penetration resistance throughout the laminated glass, and a laminated glass including the intermediate film for laminated glass.

**BACKGROUND ART**

A laminated glass is a safety glass because few glass fragments are scattered even if it is broken by impact from the outside. Therefore, the laminated glass has been used widely for automobiles, railway cars, aircrafts, vessels, buildings, and the like. The laminated glass includes an intermediate film for laminated glass sandwiched between a pair of glass sheets.

Known applications of the laminated glass for automobiles include a head-up display (HUD). A HUD displays measurement information of driving data such as speed, on a windshield of an automobile.

The HUD however problematically displays double images of measurement information on the windshield.

For suppression of double images, Patent Document 1 has disclosed a laminated glass including a wedge-shaped intermediate film having a predetermined wedge angle between a pair of glass sheet. In such a laminated glass, adjustment of the wedge angle of the intermediate film can unite images of the measurement information reflected on one glass sheet and that reflected on another glass sheet, on a driver's field of view. Accordingly, the measurement information is hardly seen double and the view of a driver is not disturbed.

CITATION LIST

Patent Document

[Patent Document 1]

JPH 04-502525 A

**SUMMARY OF THE INVENTION**

**PROBLEMS TO BE SOLVED BY THE INVENTION**

A laminated glass including a wedge-shaped intermediate film disclosed in Patent Document 1 may problematically have low penetration resistance. Particularly, the penetration resistance may be partially low in the laminated glass.

The present invention aims to provide an intermediate film for laminated glass which allows, in a laminated glass, improvement in penetration resistance throughout the laminated glass, and a laminated glass including the intermediate film for laminated glass.

**MEANS FOR SOLVING THE PROBLEMS**

According to a broad aspect of the present invention, an intermediate film for laminated glass comprising: a first end and a second end, the first end being thinner than the second end; and a thin region and a thick region, the thin region having a moisture content of more than one time but not more than three times the moisture content of the thick region,
wherein the intermediate film contains a thermoplastic resin and a plasticizer, wherein the thermoplastic resin is a polyvinyl acetal resin,
wherein a distance between the first end and the second end is represented by X, the thin region is a region satisfying 0.1X to 0.2X from the first end toward an inside, and the thick region is a region satisfying 0.1X to 0.2X from the second end toward the inside,
wherein the thin region has a moisture content of 0.15% to 0.8% by weight..

The thin region preferably has a moisture content of 0.2% to 0.7% by weight.

In another specific aspect of the intermediate film for a laminated glass according to the present invention, the intermediate film preferably includes a first surface layer, a second surface layer, and an intermediate layer provided between the first surface layer and the second surface layer.

The first surface layer and the second surface layer each contain a polyvinyl acetal resin and a plasticizer, the intermediate layer contains a polyvinyl acetal resin and a plasticizer, and the amount of a hydroxyl group in the polyvinyl acetal resin contained in each of the first surface layer and the second surface layer is preferably higher than the amount of a hydroxyl group in the polyvinyl acetal resin contained in the intermediate layer. The amount of hydroxyl groups in the polyvinyl acetal resin contained in each of the first surface layer and the second surface layer is preferably higher than the amount of hydroxyl groups in the polyvinyl acetal resin contained in the intermediate layer by at least 1 mol%. The amount of hydroxyl groups in the polyvinyl acetal resin contained in each of the first surface layer and the second surface layer is preferably 20 to 38 mol%.

The intermediate layer preferably has a plasticizer content for 100 parts by weight of the polyvinyl acetal resin higher than a plasticizer content for 100 parts by weight of the polyvinyl acetal resin of each of the first surface layer and the second surface layer. The intermediate layer preferably has a plasticizer content for 100 parts by weight of the polyvinyl acetal resin higher than the plasticizer content for 100 parts by weight of the polyvinyl acetal resin of each of the first surface layer and the second surface layer by at least 5 parts by weight. The intermediate layer preferably has a plasticizer content for 100 parts by weight of the polyvinyl acetal resin of 45 to 75 parts by weight, and the first surface layer and the second surface layer each preferably have a plasticizer content for 100 parts by weight of the polyvinyl acetal resin of 20 to 50 parts by weight.

The intermediate film for laminated glass according to the present invention preferably has a wedge-shaped cross section in a thickness direction.

The present invention also provides laminated glass comprising: a first component for laminated glass; a second component for laminated glass; and an intermediate film sandwiched between the first component for laminated glass and the second component for laminated glass, wherein the intermediate film includes the intermediate film for laminated glass according to the present invention.

## EFFECT OF THE INVENTION

In the intermediate film for laminated glass of the present invention, a first end is thinner than a second end, and a thin region has a moisture content higher than that of a thick region. Accordingly, in a laminated glass including the intermediate film for laminated glass of the present invention, the penetration resistance of the laminated glass is hardly partially low, so that the penetration resistance throughout the laminated glass is improved.

## BRIEF DESCRIPTION OF DRAWINGS

Figs. 1 (a) and 1 (b) are a cross-sectional view and a plan view which each schematically illustrate an intermediate film for laminated glass according to an embodiment of the present invention.
Fig. 2 is a cross-sectional view schematically illustrating an intermediate film for laminated glass according to another embodiment of the present invention.
Fig. 3 is a cross-sectional view illustrating a first modification example of a cross section of the intermediate film for laminated glass in a thickness direction.
Fig. 4 is a cross-sectional view illustrating a second modification example of the cross section of the intermediate film for laminated glass in the thickness direction.
Fig. 5 is a cross-sectional view illustrating a third modification example of the cross section of the intermediate film for laminated glass in the thickness direction.
Fig. 6 is a cross-sectional view illustrating one example of a laminated glass including the intermediate film for laminated glass illustrated in Figs. 1.
Fig. 7 is a view for describing a method of obtaining three laminated glasses C1 to C3 used for evaluation of the penetration resistance in examples.

## MODE(S) FOR CARRYING OUT THE INVENTION

The present invention is described with reference to drawings based on specific embodiments and examples of the present invention.

(Intermediate film for laminated glass)

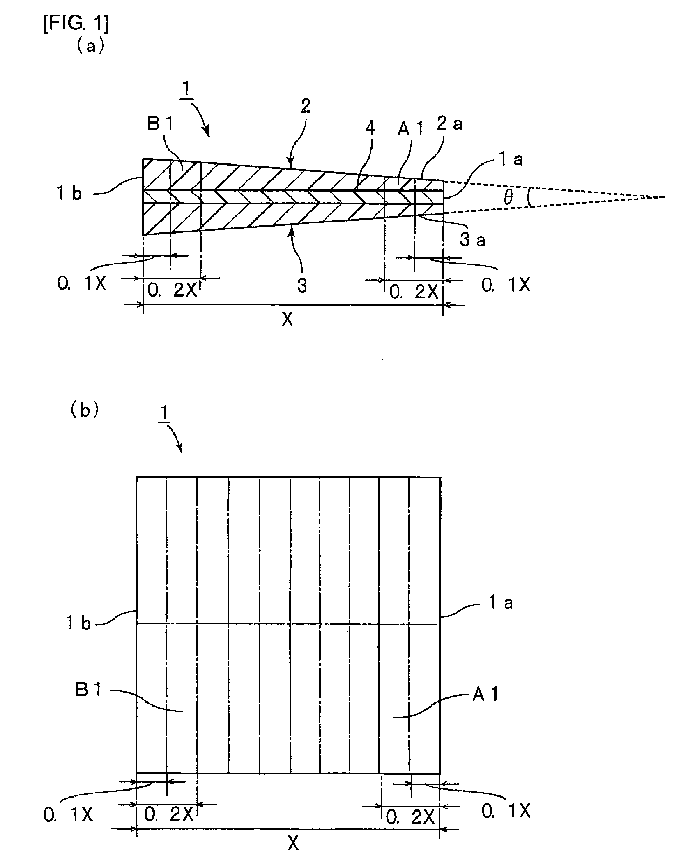

Figs. 1 (a) and 1 (b) are a cross-sectional view and a plan view which each schematically illustrate an intermediate film for laminated glass according to an embodiment of the present invention.

Fig. 1(a) illustrates a cross section of an intermediate film 1 in a thickness direction. It is to be noted that the thicknesses of the intermediate film and of the layers in the intermediate film and the wedge angle θ illustrated in Fig. 1 (a) and in the following drawings are different from the actual thicknesses and wedge angle for illustration purpose.

The intermediate film 1 includes a first surface layer 2, a second surface layer 3, and an intermediate layer 4 sandwiched between the first surface layer 2 and the second surface layer 3. The intermediate layer 4 has the first surface layer 2 laminated on one face (first face). The intermediate layer 4 has the second surface layer 3 laminated on the other face (second face that is the opposite face of the first face) . The intermediate layer 4 is positioned between the first surface layer 2 and the second surface layer 3, and is sandwiched between the first surface layer 2 and the second surface layer 3. The intermediate film 1 is used for production of a laminated glass. The intermediate film 1 is an intermediate film for laminated glass. The intermediate film 1 is a multilayer intermediate film.

The intermediate film 1 has a first end 1a and a second end 1b that is the opposite end of the first end 1a. The first end 1a and the second end 1b are ends on sides opposite to each other. The first surface layer 2 and the second surface layer 3 each have a wedge-shaped cross section in the thickness direction. The first surface layer 2 and the second surface layer 3 each are thinner on the side of the first end 1a than on the side of the second end 1b. Accordingly, the first end 1a is thinner than the second end 1b in the intermediate film 1. Namely, the intermediate film 1 has a thin region (hereinafter, also referred to as a region A) and a thick region (hereinafter, also referred to as a region B).

As a main feature of the present embodiment, the thin region A has a moisture content higher than that of the thick region B.

The present inventors have found out that a conventional laminated glass including an intermediate film for laminated glass in which one end is thinner than the other end has penetration resistance that varies among portions of the laminated glass. That is presumably affected by difference in adhesiveness to a component for laminated glass between a thick region and a thin region.

The present inventors have intensively studied to achieve improvement in penetration resistance throughout the laminated glass, and have found out the following solution. Namely, in an intermediate film for laminated glass in which one end is thinner than the other end, the moisture content of the thin region A higher than the moisture content of the thick region B allows improvement in penetration resistance throughout the laminated glass.

As illustrated in Figs. 1 (a) and 1 (b), assuming that the distance between the first end 1a and the second end 1b is represented by X, the thin region A is preferably a region A1 satisfying 0.1X to 0.2X from the first end 1a toward the inside and the thick region B is preferably a region B1 satisfying 0.1X to 0.2X from the second end 1b toward the inside. In the case where the thin region A and the thick region B are the region A1 and the region B1, respectively, the penetration resistance is sufficiently improved throughout the laminated glass.

From the standpoint of further improvement in penetration resistance throughout the laminated glass, the thin region A (A1) preferably has a moisture content of more than one time but not more than three times the moisture content of the thick region B (B1). The thin region A (A1) has a moisture content of more preferably at least 1.2 times, still more preferably at least 1.3 times, and particularly preferably at least 1.4 times the moisture content of the thick region B (B1). The thin region A (A1) has a moisture content of more preferably not more than 2.5 times, still more preferably not more than twice, and particularly preferably not more than 1.8 times the moisture content of the thick region B (B1).

From the standpoint of further improvement in penetration resistance throughout the laminated glass, the thin region A and the thin region A1 each preferably has a moisture content of 0.15% to 0.8% by weight. The lower limit of the moisture content of the thin region A and the thin region A1 each is more preferably 0.2% by weight, still more preferably 0.22% by weight, particularly preferably 0.25% by weight, and most preferably 0.3% by weight. The upper limit thereof is more preferably 0.75% by weight, still more preferably 0.7% by weight, particularly preferably 0.6% by weight, and most preferably 0.55% by weight. From the standpoint of efficient improvement in penetration resistance throughout the laminated glass, the thin region A and the thin region A1 each particularly preferably has a moisture content of 0.2% to 0.7% by weight.

Assuming that the distance between the thin first end and the thick second end is represented by X, in each of regions satisfying 0.2X to 0.3X, 0.3X to 0.4X, 0.4X to 0.5X, 0.5X to 0.6X, 0.6X to 0.7X, and 0.7X to 0.8X from the thin first end toward the inside, the lower limit of the moisture content is preferably 0.2% by weight and more preferably 0.25% by weight. The upper limit thereof is preferably 0.7% by weight and more preferably 0.6% by weight. From the standpoint of further improvement in penetration resistance throughout the laminated glass, in each of regions satisfying 0.2X to 0.3X, 0.3X to 0.4X, 0.4X to 0.5X, 0.5X to 0.6X, 0.6X to 0.7X, and 0.7X to 0.8X from the thin first end toward the inside, the moisture content is preferably lower than that of the region satisfying 0.1X to 0.2X from the thin first end toward the inside and is preferably higher than that of the region satisfying 0.8X to 0.9X from the thin first end toward the inside (0.1X to 0.2X from the second end toward the inside). In the intermediate film, as the thickness of the intermediate film is thinner, the moisture content is preferably higher.

A method of partially varying the moisture content of the intermediate film 1 is not particularly limited. Examples thereof include a method of storing the intermediate film 1 under a predetermined humidity for a predetermined time, and a method of storing the intermediate film 1 in such a manner that the thick region is placed under an environment of high temperature and low humidity.

Specific examples of the method of storing the intermediate film 1 under a predetermined humidity for a predetermined time include a method of storing the intermediate film 1 under conditions of constant temperature and humidity (23°C, relative humidity of 25%) for several hours to several days.

From the standpoint of further improvement in adhesiveness of the intermediate film 1, the first surface layer 2, the second surface layer 3 and the intermediate layer 4 each preferably contain a thermoplastic resin, and more preferably contain a thermoplastic resin and a plasticizer. The thermoplastic resin is a polyvinyl acetal resin. A combination use of a polyvinyl acetal resin and a plasticizer further improves the adhesiveness of the intermediate film 1 to a component for laminated glass. The thermoplastic resin and the plasticizer are later described in detail.

From the standpoint of further improvement in sound insulation of the intermediate film 1 in the case where the first surface layer 2, the second surface layer 3 and the intermediate layer 4 each contain the polyvinyl acetal resin, the amount of hydroxyl groups in the polyvinyl acetal resin contained in each of the first surface layer 2 and the second surface layer 3 is preferably higher than the amount of hydroxyl groups in the polyvinyl acetal resin contained in the intermediate layer 4. The amount of hydroxyl groups in the polyvinyl acetal resin contained in each of the first surface layer 2 and the second surface layer 3 is higher than the amount of hydroxyl groups in the polyvinyl acetal resin contained in the intermediate layer 4 by preferably at least 1 mol%, more preferably at least 3 mol%, still more preferably at least 4 mol%, and particularly preferably at least 5 mol%. The small amount of hydroxyl groups in the polyvinyl acetal resin contained in the intermediate layer 4 lowers the hydrophilicity of the polyvinyl acetal resin. Accordingly, the intermediate layer 4 is allowed to have a higher plasticizer content, so that the sound insulation of the intermediate film 1 is improved.

From the standpoint of further improvement in sound insulation of the intermediate film 1, the amount of hydroxyl groups (hydroxyl group content) in the polyvinyl acetal resin contained in each of the first surface layer 2 and the second surface layer 3 is preferably 20 to 38 mol%. The lower limit of the amount of hydroxyl groups in the polyvinyl acetal resin contained in each of the first surface layer 2 and the second surface layer 3 is more preferably 22 mol% and still more preferably 25 mol%. The upper limit thereof is more preferably 35 mol% and still more preferably 32 mol%.

The amount of hydroxyl groups (hydroxyl group content) of the polyvinyl acetal resin is a percentage (mol%) value of a mole fraction obtained by dividing the amount of ethylene groups attached to hydroxyl groups by the amount of total ethylene groups in the main chain. The amount of ethylene groups attached to hydroxyl groups is determined by measurement of the amount of ethylene groups attached to hydroxyl groups in the polyvinyl acetal resin, for example, by a method in accordance with JIS K6728 "Testing methods for polyvinyl butyral".

From the standpoint of further improvement in sound insulation of the intermediate film 1 in the case where the first surface layer 2, the second surface layer 3 and the intermediate layer 4 each contain the polyvinyl acetal resin and the plasticizer, the amount of the plasticizer for 100 parts by weight of the polyvinyl acetal resin in the intermediate layer 4 is preferably larger than the amount of the plasticizer for 100 parts by weight of the polyvinyl acetal resin in each of the first surface layer 2 and the second surface layer 3. The amount of the plasticizer for 100 parts by weight of the polyvinyl acetal resin in the intermediate layer 4 is larger than the amount of the plasticizer for 100 parts by weight of the polyvinyl acetal resin in each of the first surface layer 2 and the second surface layer 3 by preferably at least 5 parts by weight, more preferably at least 10 parts by weight, and still more preferably at least 15 parts by weight.

From the standpoint of further improvement in sound insulation of the intermediate film 1, preferably, the amount of the plasticizer for 100 parts by weight of the polyvinyl acetal resin in the intermediate layer 4 is 45 to 75 parts by weight and the amount of the plasticizer for 100 parts by weight of the polyvinyl acetal resin in each of the first surface layer 2 and the second surface layer 3 is 20 to 50 parts by weight. The lower limit of the amount of the plasticizer for 100 parts by weight of the polyvinyl acetal resin in the intermediate layer 4 is more preferably 50 parts by weight. The upper limit thereof is more preferably 70 parts by weight and still more preferably 65 parts by weight. The lower limit of the amount of the plasticizer for 100 parts by weight of the polyvinyl acetal resin in each of the first surface layer 2 and the second surface layer 3 is more preferably 30 parts by weight. The upper limit thereof is more preferably 45 parts by weight.

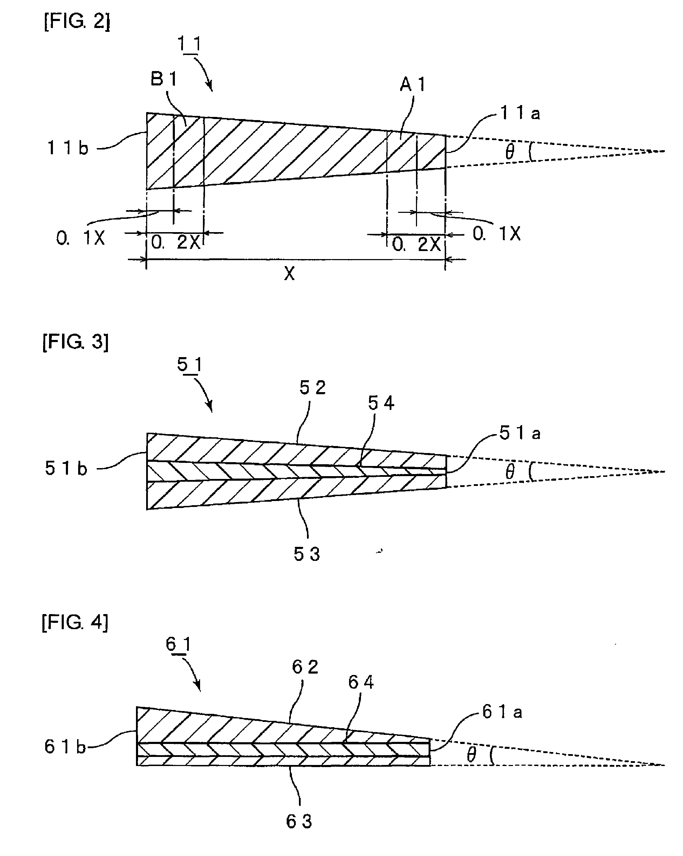

Fig. 2 illustrates a cross-sectional view of an intermediate film for laminated glass according to another embodiment of the present invention.

An intermediate film 11 illustrated in Fig. 2 is a monolayer intermediate film for laminated glass.

The intermediate film 11 has a first end 11a and a second end 11b that is the opposite end of the first end 11a. The first end 11a is thinner than the second end 11b. A thin region A has a moisture content higher than the moisture content of a thick region B in the intermediate film 11.

As illustrated in Fig. 2, assuming that the distance between the first end 11a and the second end 11b is represented by X, the thin region A is preferably a region A1 satisfying 0.1X to 0.2X from the first end 11a toward the inside and the thick region B is preferably a region B1 satisfying 0.1X to 0.2X from the second end 11b toward the inside.

Preferable ranges and a preferable relation of the moisture contents of the thin region A (A1) and the thick region B (B1) in the intermediate film 11 are the same as preferable ranges and a preferable relation of the moisture contents of the thin region A (A1) and the thick region B (B1) in the intermediate film 1.

From the standpoint of further improvement in adhesiveness of the intermediate film 11, the intermediate film 11 preferably contains a thermoplastic resin, and preferably contains both a thermoplastic resin and a plasticizer. The thermoplastic resin is a polyvinyl acetal resin.

In the case where the monolayer intermediate film 11 contains the polyvinyl acetal resin, the lower limit of the amount of hydroxyl groups in the polyvinyl acetal resin is preferably 20 mol%, more preferably 22 mol%, and still more preferably 25 mol%. The upper limit thereof is preferably 40 mol%, more preferably 35 mol%, and still more preferably 32 mol%. The amount of hydroxyl groups satisfying the preferable lower and upper limits further improves the penetration resistance of laminated glass to be obtained.

In the case where the monolayer intermediate film 11 contains the polyvinyl acetal resin and the plasticizer, the lower limit of the amount of the plasticizer for 100 parts by weight of the polyvinyl acetal resin is preferably 20 parts by weight and more preferably 25 parts by weight. The upper limit thereof is preferably 50 parts by weight and more preferably 45 parts by weight. The amount of the plasticizer satisfying the preferable lower and upper limits further improves the penetration resistance of laminated glass to be obtained.

From the standpoint of further improvement in sound insulation of the laminated glass, the intermediate film for laminated glass preferably has a multilayer structure, and more preferably has a first surface layer 2, a second surface layer 3 and an intermediate layer 4 provided between the first surface layer 2 and the second surface layer 3.

The intermediate film 1 illustrated in Fig, 1 has a structure in which the intermediate layer 4 in a rectangular shape is sandwiched between the first surface layer 2 in a wedge shape and the second surface layer 3 in a wedge shape. Figs. 3 to 5 illustrate first to third modification examples in which the shapes of the layers in the intermediate film are changed.

An intermediate film 51 according to a first modification example illustrated in Fig. 3 includes a first surface layer 52 having a wedge-shaped cross section in the thickness direction, a second surface layer 53 having a wedge-shaped cross section in the thickness direction and an intermediate layer 54 having a wedge-shaped cross section in the thickness direction sandwiched between the first surface layer 52 and the second surface layer 53. In the first surface layer 52, the second surface layer 53 and the intermediate layer 54, a first end 51a side is thinner than a second end 51b side.

An intermediate film 61 according to a second modification example illustrated in Fig. 4 includes a first surface layer 62 having a wedge-shaped cross section in the thickness direction, a second surface layer 63 having a rectangular cross section in the thickness direction, and an intermediate layer 64 having a rectangular cross section in the thickness direction sandwiched between the first surface layer 62 and the second surface layer 63. In the first surface layer 62, a first end 61a side is thinner than a second end 61b side.

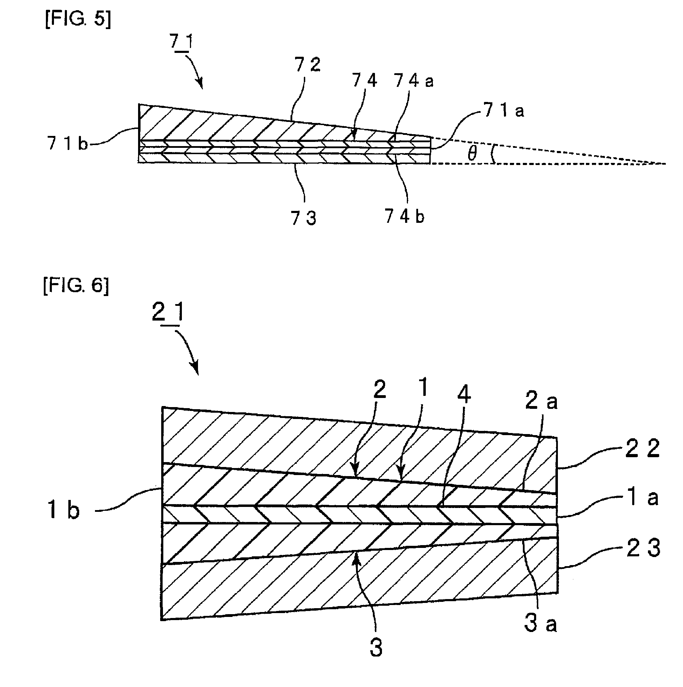

An intermediate film 71 according to a third modification example illustrated in Fig. 5 includes a first surface layer 72 having a wedge-shaped cross section in the thickness direction, a second surface layer 73 having a rectangular cross section in the thickness direction, and an intermediate layer 74 having a rectangular cross section in the thickness direction and a two-layer structure sandwiched between the first surface layer 72 and the second surface layer 73. The intermediate layer 74 has a multilayer structure in which a first intermediate layer 74a and a second intermediate layer 74b are laminated. In the first surface layer 72, a first end 71a side is thinner than a second end 71b side.

The intermediate films 1, 11, 51, 61, and 71 each have a wedge-shaped cross section in the thickness direction. The intermediate films 1, 11, 51, 61, and 71 each have a shape in which the thickness gradually increases from the first ends 1a, 11a, 51a, 61a, and 71a toward the second end 1b, 11b, 51b, 61b, and 71b. The intermediate film preferably has a wedge-shaped cross section in the thickness direction. The intermediate film preferably has a shape in which the thickness gradually increases from the first end toward the second end. Other exemplary cross-sectional shapes of the intermediate film in the thickness direction include trapezoidal shape and triangular shape.

For suppression of double images, the wedge angle θ of the intermediate film can be appropriately set in accordance with the mounting angle of the laminated glass. From the standpoint of further suppression of double images, the lower limit of the wedge angle θ of the intermediate film is preferably 0.01 mrad (0.0006 degrees) and more preferably 0.2 mrad (0.0115 degrees) while the upper limit thereof is preferably 2 mrad (0.1146 degrees) and more preferably 0.7 mrad (0.0401 degrees).

The intermediate film may partially have a color band. The intermediate film may partially have a colored region. In the case where the multilayer intermediate film 1 has a color band or colored region, preferably, any one of the first surface layer 2 and the second surface layer 3 has a color band or colored region. Alternatively, the intermediate layer 4 may have a color band or colored region. For formation of the color band or colored region, for example, a colorant may be added in a predetermined region in extrusion molding of the intermediate film for laminated glass or the layers in the intermediate film.

The thickness of the intermediate film is not particularly limited. The thickness of the intermediate film refers to the total thickness of the layers included in the intermediate film. In the case of the multilayer intermediate film 1, the thickness of the intermediate film 1 indicates the total thickness of the first surface layer 2, the second surface layer 3 and the intermediate layer 4. The upper limit of the maximum thickness of the intermediate film is preferably 3 mm, more preferably 2 mm, and still more preferably 1.5 mm. The lower limit of the minimum thickness of the intermediate film is preferably 0.1 mm, more preferably 0.25 mm, still more preferably 0.5 mm, and particularly preferably 0.8 mm. Assuming that the distance between the first end and the second end is represented by X, the intermediate film preferably has the minimum thickness in a region satisfying 0X to 0.2X from the first end toward the inside and the maximum thickness in a region satisfying 0X to 0.2X from the second end toward the inside. The intermediate film more preferably has the minimum thickness in a region satisfying 0X to 0.1X from the first end toward the inside and the maximum thickness in a region satisfying 0X to 0.1X from the second end toward the inside. The intermediate film preferably has a minimum thickness at the first end and the maximum thickness at the second end. The intermediate films 1, 11, 51, 61, and 71 respectively have the minimum thickness at the first ends 1a, 11a, 51a, 61a, and 71a, and the maximum thickness at the second ends 1b, 11b, 51b, 61b, and 71b.

From the standpoint of a practical aspect and sufficient improvement in adhesiveness and penetration resistance, the upper limit of the maximum thickness of each of the first surface layer 2 and the second surface layer 3 is preferably 1 mm and more preferably 0.8 mm. The lower limit of the minimum thickness of each of the first surface layer 2 and the second surface layer 3 is preferably 0.001 mm, more preferably 0.2 mm, and still more preferably 0.3 mm.

From the standpoint of a practical aspect and sufficient improvement in penetration resistance, the upper limit of the maximum thickness of the intermediate layer 4 is preferably 0.8 mm, more preferably 0.6 mm, and still more preferably 0.3 mm. The lower limit of the minimum thickness of the intermediate layer 4 is preferably 0.001 mm, more preferably 0.1 mm, and still more preferably 0.2 mm.

Hereinafter, detailed description is given on the materials of layers in a multilayer intermediate film and a monolayer intermediate film.

(Thermoplastic resin)

The thermoplastic resin is a polyvinyl acetal resin.

The polyvinyl acetal resin can be produced by acetalization of polyvinyl alcohol with an aldehyde, for example. The polyvinyl alcohol can be produced by saponification of polyvinyl acetate, for example.

A method of producing the polyvinyl acetal resin is not particularly limited. For example, powdery polyvinyl acetal resin can be produced by a method including the steps of dissolving polyvinyl alcohol resin in warm water or hot water, maintaining the resulting aqueous solution at a predetermined temperature of about 0°C to 95°C, adding an aldehyde and an acid catalyst to the solution to promote acetalization with stirring, increasing the reaction temperature for aging to complete the reaction, and neutralizing, washing, and drying the resulting product.

The lower limit of the degree of acetylation (amount of acetyl groups) of the polyvinyl acetal resin contained in the intermediate layer is preferably 0.1 mol%, more preferably 0.4 mol%, and still more preferably 0.8 mol%. The upper limit thereof is preferably 30 mol%, more preferably 25 mol%, still more preferably 20 mol%, and particularly preferably 15 mol%. In the case where each of the first surface layer and the second surface layer contain a polyvinyl acetal resin, the lower limit of the degree of acetylation of the polyvinyl acetal resin contained in the second surface layer and the third surface layer is preferably 0.1 mol% and more preferably 0.4 mol%. The upper limit thereof is preferably 20 mol%, more preferably 5 mol%, still more preferably 2 mol%, and particularly preferably 1.5 mol%. The degree of acetylation satisfying the preferable lower limit further increases the compatibility between the polyvinyl acetal resin and the plasticizer and sufficiently lowers the glass transition temperature of the intermediate film. The degree of acetylation satisfying the preferable upper limit further increases the moisture resistance of an intermediate film to be obtained.

From the standpoint of further improvement in sound insulation of the laminated glass, the degree of acetylation of the polyvinyl acetal resin contained in the intermediate layer is preferably higher than the degree of acetylation of the polyvinyl acetal resin contained in each of the first surface layer and the second surface layer. From the standpoint of further improvement in sound insulation of the laminated glass, the degree of acetylation of the polyvinyl acetal resin contained in the intermediate layer is higher than the degree of acetylation of the polyvinyl acetal resin contained in each of the first surface layer and the second surface layer by preferably at least 0.1 mol%, more preferably at least 1 mol%, still more preferably at least 5 mol%, and particularly preferably at least 10 mol%.

From the standpoint of further improvement in sound insulation of the laminated glass, the degree of acetalization of the polyvinyl acetal resin contained in the intermediate layer is preferably higher than the degree of acetalization of the polyvinyl acetal resin contained in each of the first surface layer and the second surface layer.

The degree of acetylation is determined as described below. The amounts of ethylene groups attached to acetal groups and ethylene groups attached to hydroxyl groups are subtracted from the total amount of ethylene groups in the main chain. The obtained value is divided by the total amount of ethylene groups in the main chain. The obtained mole fraction expressed as percent (mol%) is the acetylation degree. The amount of ethylene groups attached to acetal groups can be measured in accordance with JIS K6728 "Testing methods for Polyvinyl butyral".

For further suppression of bubble formation and bubble growth in the laminated glass and further improvement in sound insulation of the laminated glass in the case where the intermediate layer contains a polyvinyl acetal resin, the polyvinyl acetal resin is preferably a polyvinyl acetal resin A having a degree "a" of acetylation of not more than 8 mol% and a degree "a" of acetalization of not less than 70 mol% or a polyvinyl acetal resin B having a degree "b" of acetylation degree of more than 8 mol%. The polyvinyl acetal resin may be a polyvinyl acetal resin A having a degree "a" of acetylation of not more than 8 mol% and a degree "a" of acetalization of not less than 70 mol% and may be a polyvinyl acetal resin B having a degree "b" of acetylation of more than 8 mol%.

The upper limit of the degree "a" of acetylation of the polyvinyl acetal resin A is 8 mol%, preferably 7.5 mol%, more preferably 7 mol%, still more preferably 6.5 mol%, and particularly preferably 5 mol%. The lower limit thereof is preferably 0.1 mol%, more preferably 0.5 mol%, still more preferably 0.8 mol%, and particularly preferably 1 mol%. The degree "a" of acetylation satisfying the above upper and lower limits allows easy control of migration of the plasticizer and further increase the sound insulation of laminated glass to be obtained.

The polyvinyl acetal resin A has a minimum degree "a" of acetalization of 70 mol%, preferably 70.5 mol%, more preferably 71 mol%, still more preferably 71.5 mol%, and particularly preferably 72 mol%. The maximum degree "a" of acetalization is preferably 85 mol%, more preferably 83 mol%, still more preferably 81 mol%, and particularly preferably 79 mol%. The degree "a" of acetalization satisfying the lower limit further increases the sound insulation of laminated glass to be obtained. The degree "a" of acetalization satisfying the upper limit shortens the reaction time needed for production of the polyvinyl acetal resin A.

The lower limit of the hydroxyl group content "a" of the polyvinyl acetal resin A is preferably 18 mol%, more preferably 19 mol%, still more preferably 20 mol%, and particularly preferably 21 mol%. The upper limit thereof is preferably 31 mol%, more preferably 30 mol%, still more preferably 29 mol%, and particularly preferably 28 mol%. The hydroxyl group content "a" satisfying the preferable lower limit further improves the adhesiveness of an intermediate film to be obtained. The hydroxyl group content "a" satisfying the preferable upper limit further improves the sound insulation of laminated glass to be obtained.

The polyvinyl acetal resin A is preferably a polyvinyl butyral resin.

The degree "b" of acetylation of the polyvinyl acetal resin B is more than 8 mol%. The lower limit thereof is preferably 9 mol%, more preferably 9.5 mol%, still more preferably 10 mol%, and particularly preferably 10.5 mol%. The upper limit thereof is preferably 30 mol%, more preferably 28 mol%, still more preferably 26 mol%, and particularly preferably 24 mol%. The degree "b" of acetylation satisfying the lower limit further improves the sound insulation of laminated glass to be obtained. The degree "b" of acetylation satisfying the upper limit shortens the reaction time needed for production of the polyvinyl acetal resin B.

The lower limit of the degree "b" of acetalization of the polyvinyl acetal resin B is preferably 50 mol%, more preferably 53 mol%, still more preferably 55 mol%, and particularly preferably 60 mol%. The upper limit thereof is preferably 80 mol%, more preferably 78 mol%, still more preferably 76 mol%, and particularly preferably 74 mol%. The degree "b" of acetalization satisfying the lower limit further improves the sound insulation of laminated glass to be obtained. The degree "b" of acetalization satisfying the upper limit shortens the reaction time needed for production of the polyvinyl acetal resin B.

The lower limit of the hydroxyl group content "b" of the polyvinyl acetal resin B is preferably 18 mol%, more preferably 19 mol%, still more preferably 20 mol%, and particularly preferably 21 mol%. The upper limit thereof is preferably 31 mol%, more preferably 30 mol%, still more preferably 29 mol%, and particularly preferably 28 mol%. The hydroxyl group content "b" satisfying the preferable lower limit further improves the adhesiveness of an intermediate film to be obtained. The hydroxyl group content "b" satisfying the preferable upper limit further improves the sound insulation of laminated glass to be obtained.

The polyvinyl acetal resin B is preferably a polyvinyl butyral resin.

The polyvinyl acetal resin A and the polyvinyl acetal resin B are each obtained by acetalization of polyvinyl alcohol with an aldehyde. The aldehyde preferably has 1 to 10 carbon atom(s), and more preferably 4 or 5 carbon atoms.

(Plasticizer)

The plasticizer is not particularly limited. A conventionally known plasticizer may be used as the plasticizer. Only one plasticizer may be used or two or more plasticizers may be used in combination.

Examples of the plasticizer include organic ester plasticizers such as monobasic organic esters and polybasic organic esters, phosphoric acid plasticizers such as organic phosphoric acid plasticizers and organic phosphorous acid plasticizers, diisononyl cyclohexane-1,2-dicarboxylate (DINCH) may be used as the plasticizer. In particular, organic ester plasticizer is preferable. The plasticizer is preferably a liquid plasticizer.

Examples of the monobasic organic acid ester include, but not particularly limited to, a glycol ester obtained through a reaction of glycol and a monobasic organic acid, and an ester of a monobasic organic acid and one of triethylene glycol and tripropylene glycol. Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octyl acid, 2-ethylhexyl acid, n-nonylic acid, and decylic acid.

Examples of the polybasic organic acid ester include, but not particularly limited to, ester compounds of polybasic organic acids and C4 to C8 linear- or branched alcohols. Examples of the polybasic organic acid include adipic acid, sebacic acid, and azelaic acid.

Examples of the organic ester plasticizers include, but not particularly limited to, triethyleneglycol di-2-ethylbutyrate, triethyleneglycol di-2-ethylhexanoate, triethyleneglycol dicaprylate, triethyleneglycol di-n-octanoate, triethyleneglycol di-n-heptanoate, tetraethyleneglycol di-n-heptanoate, dibutyl sebacate, dioctyl azelate, dibutyl carbitol adipate, ethylene glycol di-2-ethylbutyrate, 1,3-propyrene glycol di-2-ethylbutyrate, 1,4-butylene glycol di-2-ethylbutyrate, diethylene glycol di-2-ethylbutyrate, diethylene glycol di-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexylcyclohexyl adipate, a mixture of heptyl adipate and nonyl adipate, diisononyl adipate, diisodecyl adipate, heptylnonyl adipate, di-2-ethylhexyl adipate (DOA), dibutyl sebacate, oil-modified alkyd sebacate, and a mixture of phosphate ester and adipic acid ester. An organic ester plasticizer other than the above plasticizers may also be used. Another adipic acid ester other than the above mentioned adipic acid esters may also be used.

Examples of the organic phosphate plasticizer include, but not particularly limited to, tributoxyethyl phosphate, isodecyl phenyl phosphate, and troisopropyl phosphate.

The plasticizer preferably contains at least one selected from the group consisting of triethyleneglycol di-2-ethylhexanoate (3GO), triethyleneglycol di-2-ethylbutyrate (3GH), di-2-ethylhexyl adipate (DOA), and diisononyl cyclohexane-1,2-dicarboxylate (DINCH). The plasticizer more preferably contains at least one of triethyleneglycol di-2-ethylhexanoate (3GO) and triethyleneglycol di-2-ethylbutyrate (3GH). The plasticizer still more preferably contains triethyleneglycol di-2-ethylhexanoate (3GO).

(Other component)

The intermediate film for laminated glass according to the present invention may optionally contain additives such as UV absorbents, antioxidants, light stabilizers, flame retardants, antistatic agents, pigments, dyes, adhesiveness modifiers, anti-humidity agents, fluorescent bleaches, and infrared absorbents.

(Laminated glass)

The intermediate film for laminated glass according to the present invention is used for production of a laminated glass.

Fig. 6 illustrates one example of a laminated glass including the intermediate film 1 illustrated in Fig. 1.

A laminated glass 21 illustrated in Fig. 6 includes an intermediate film 1, a first component for laminated glass 22 and a second component for laminated glass 23. The intermediate film 1 is an intermediate film for laminated glass. The intermediate film 1 is sandwiched between the first component for laminated glass 22 and the second component for laminated glass 23. Accordingly, in the laminated glass 21, the first component for laminated glass 22, the intermediate film 1, and the second component for laminated glass 23 are laminated in the stated order. The first component for laminated glass 22 is laminated on an outer surface 2a of a first surface layer 2. The second component for laminated glass 23 is laminated on an outer surface 3a of a second surface layer 3.

Examples of the first component for laminated glass 22 and the second component for laminated glass 23 include glass sheets and PET (polyethylene terephthalate) films. The laminated glass 21 encompasses not only a laminated glass having an intermediate film sandwiched between two glass sheets but also a laminated glass having an intermediate film sandwiched between a glass sheet and a PET film. The laminated glass 21 is a laminated product provided with glass sheet (s) preferably including at least one glass sheet.

Examples of the glass sheet include inorganic glass and organic glass. Examples of the inorganic glass include float plate glass, heat absorbing plate glass, heat reflecting glass, polished plate glass, molded plate glass, wire plate glass, lined plate glass, and green glass. The organic glass is a synthetic resin glass substituted for inorganic glass. Examples of the organic glass include polycarbonate plates and poly(meth)acrylic resin plates. Examples of the poly(meth)acrylic resin plates include polymethyl (meth)acrylate plates.

The thickness of each of the first component for laminated glass 22 and the second component for laminated glass 23 is not particularly limited, and is preferably 1 to 5 mm. In the case where the first component for laminated glass 22 and the second component for laminated glass 23 are glass sheets, the glass sheets each preferably have a thickness of 1 to 5 mm. If the first component for laminated glass 22 and the second component for laminated glass 23 are PET films, the PET films each preferably have a thickness of 0.03 to 0.5 mm.

A method of producing the laminated glass 21 is not particularly limited. For example, the intermediate film 1 is positioned between the first component for laminated glass 22 and the second component for laminated glass 23. The air remaining between the intermediate film 1 and the first component for laminated glass 22 or the second component for laminated glass 23 is removed by pressing the resulting product with pressure rollers, or by putting the product in a rubber bag for vacuum-sucking. Then, the product is pre-bonded at about 70°C to 110°C to give a laminate. Next, the laminate is put into an autoclave or is pressed so as to be pressure-bonded with a pressure of 1 to 1.5 MPa at about 120° to 150°C. Thus, the laminated glass 21 can be obtained.

The intermediate film and the laminated glass can be widely used for cars, rail cars, aircrafts, vessels, buildings, and the like. The intermediate film is preferably an intermediate film for buildings or vehicles, and more preferably an intermediate film for vehicles. The laminated glass is preferably a laminated glass for buildings or vehicles, and more preferably an intermediate film for vehicles. The intermediate film and the laminated glass can be used for windshields, side glass, rear glass, roof glass, and the like of cars. The intermediate film and the laminated glass may also be used for other applications. Since the intermediate film and the laminated glass can suppress double images, they are favorably used for windshields of cars. The intermediate film is preferably used in a laminated glass of a head-up display (HUD). The laminated glass is preferably a head-up display.

With the laminated glass, a display unit of an instrumental panel can reflect measurement information such as speed sent from a control unit, on a windshield. Accordingly, the driver can recognize the view ahead and the measurement information at the same time without downward moving of his/her view.

The present invention is more specifically described based on examples. The present invention is however not limited only to these examples.

(Example 1)

Production of a first surface layer and a second surface layer:

Triethylene glycol di-2-ethylhexanoate (3GO) (40 parts by weight) as a plasticizer was added to a polyvinyl butyral resin (PVB resin, the amount of hydroxyl groups: 30 mol%) (100 parts by weight), and the mixture was sufficiently kneaded with a mixing roll to give a composition 1 for producing a first surface layer and a second surface layer.

Production of intermediate layer:

Triethylene glycol di-2-ethylhexanoate (3GO) (60 parts by weight) as a plasticizer was added to a polyvinyl butyral resin (PVB resin, the amount of hydroxyl groups: 25 mol%) (100 parts by weight), and the mixture was sufficiently kneaded with a mixing roll to give a composition 2 for producing an intermediate layer.

Production of multilayer intermediate film:

The resulting composition 1 and the resulting composition 2 were co-extruded from an extruder to give a laminated body including an intermediate layer sandwiched between a first surface layer and a second surface layer. Then, the resulting laminated body was stored in an environment of high temperature and high humidity or in an environment of high temperature and low humidity, with partial variation in the temperature and humidity. Accordingly, the laminated body has a partially-varied moisture content. In this manner, a multilayer intermediate film (1000 mm in length × 350 mm in width) was produced. In the multilayer intermediate film, a first end was thinner than a second end that was the opposite end of the first end in the longitudinal direction, and the thickness in the crosswise direction was uniform. The maximum thickness and the minimum thickness of each of the first surface layer, the second surface layer and the intermediate layer, and the wedge angle θ of the intermediate layer were set as shown in Table 1. The resulting intermediate film had a wedge-shaped cross section in the thickness direction. The intermediate film had a shape in which the thickness gradually increased from the first end toward the second end.

Production of laminated glass:

The resulting multilayer intermediate film was sandwiched between two transparent float glasses (1000 mm in length × 300 mm in width × 2.5 mm in thickness) to give a laminated body. The obtained laminated body was pre-bonded with a heating roller heated at 230°C. The pre-bonded laminated body was pressure-bonded in an autoclave by a heating roller method under conditions of a temperature at 135°C and a pressure at 1.2 MPa for 20 minutes to give a laminated glass (1000 mm in length × 300 mm in width).

(Examples 2 to 11)

Multilayer intermediate films and laminated glasses were obtained in the same manner as in Example 1, except that the amounts of hydroxyl groups in the PVB resins, the kinds and the amounts of the plasticizers, the cross-sectional shapes in the thickness direction, the maximum and minimum thicknesses, and the wedge angles θ were set as shown in Table 1.

(Example 12)

Production of monolayer intermediate film:

Triethylene glycol di-2-ethylhexanoate (3GO) (40 parts by weight) as a plasticizer was added to a polyvinyl butyral resin (PVB resin, the amount of hydroxyl groups: 30 mol%) (100 parts by weight). The mixture was sufficiently kneaded with a mixing roll and then extrusion-molded with an extruder to give a molded body. The resulting molded body was stored in an environment of high temperature and high humidity or in an environment of high temperature and low humidity, with partial variation in the temperature and humidity. Accordingly, the laminated body had a partially-varied moisture content. In this manner, a monolayer intermediate film (1000 mm in length × 350 mm in width) was produced. In the monolayer intermediate film, a first end was thinner than a second end that was the opposite end of the first end in the longitudinal direction, and the thickness in the crosswise direction was uniform. The maximum thickness, the minimum thickness, and the wedge angle θ of the intermediate film were set as shown in Table 2.

(Examples 13 to 21)

Monolayer intermediate films and laminated glasses were produced in the same manner as in Example 12, except that the amounts of hydroxyl groups of the PVB resins, the kinds and amounts of the plasticizers, the cross-sectional shapes in the thickness direction, the maximum and minimum thicknesses, and the wedge angles θ were set as shown in Table 2.

(Examples 22 to 32)

Three polyvinyl butyral resins mentioned below were prepared as thermoplastic resins for producing the surface layers.
Polyvinyl butyral resin (PVB resin, the amount of hydroxyl groups: 30 mol%, the degree of acetylation: 1 mol%, the degree of butyralization: 69 mol%)
Polyvinyl butyral resin (PVB resin, the amount of hydroxyl groups: 35 mol%, the degree of acetylation: 1 mol%, the degree of butyralization: 64 mol%)
Polyvinyl butyral resin (PVB resin, the amount of hydroxyl groups: 22 mol%, the degree of acetylation: 1 mol%, the degree of butyralization: 77 mol%)
Three polyvinyl butyral resins mentioned below were prepared as thermoplastic resins for producing the intermediate layers.
Polyvinyl butyral resin (PVB resin, the amount of hydroxyl groups: 25 mol%, the degree of acetylation: 12 mol%, the degree of butyralization: 63 mol%)
Polyvinyl butyral resin (PVB resin, the amount of hydroxyl groups: 30 mol%, the degree of acetylation: 13 mol%, the degree of butyralization: 57 mol%)
Polyvinyl butyral resin (PVB resin, the amount of hydroxyl groups: 17 mol%, the degree of acetylation: 4 mol%, the degree of butyralization: 79 mol%)

Multilayer intermediate films and laminated

glasses were produced in the same manner as in Example 1, except that the PVB resins shown in Table 3 were selected from the above PVB resins for producing the surface layers and the intermediate layers, and the kinds and the amounts of the plasticizers, the cross-sectional shapes in the thickness direction, the maximum and minimum thicknesses, and the wedge angles θ were set as shown in Table 3.

(Evaluation)

(1) Moisture content

An intermediate film piece was cut out in the region A1 at a distance of 100 to 200 mm from a thin first end toward the inside of each of the resulting intermediate film (1000 mm in length × 350 mm in width, thickness variation in the longitudinal direction, multilayer or monolayer intermediate film). Separately, another intermediate film piece was cut out in a region B1 at a distance of 100 to 200 mm from a thick second end toward the inside of each of the intermediate films. The intermediate film pieces were each placed in a desiccator containing silica gel, and then, sealed with a lid. The amount of the silica gel was sufficient for absorbing moisture contained in the intermediate film piece. The desiccator was stored at 23°C and the intermediate film piece was dried until the weight thereof was not any more changed.

The weight of the intermediate film piece was measured before and after drying. Based on the measurements, the moisture content of the intermediate film piece before and after drying was calculated using the following equation (1). The weight of the intermediate film piece was measured immediately after taken out from the desiccator to avoid any change in the weight.

$$\text{Moisture content of the intermediate film for laminated glass (\% by weight)} = \{(\text{the weight of the intermediate film before drying} - \text{the weight of the intermediate film after drying}) \times 100\}/(\text{the weight of the intermediate film before drying})\dots(1)$$

(2) Penetration resistance

For evaluation of penetration resistance in three portions (thick portion, center portion, thin portion) in the laminated glass (1000 mm in length × 300 mm in width) obtained in the examples, three laminated glasses (300 mm in length × 300 mm in width) including the intermediate films (multilayer intermediate film or monolayer intermediate film) obtained in the examples were produced.

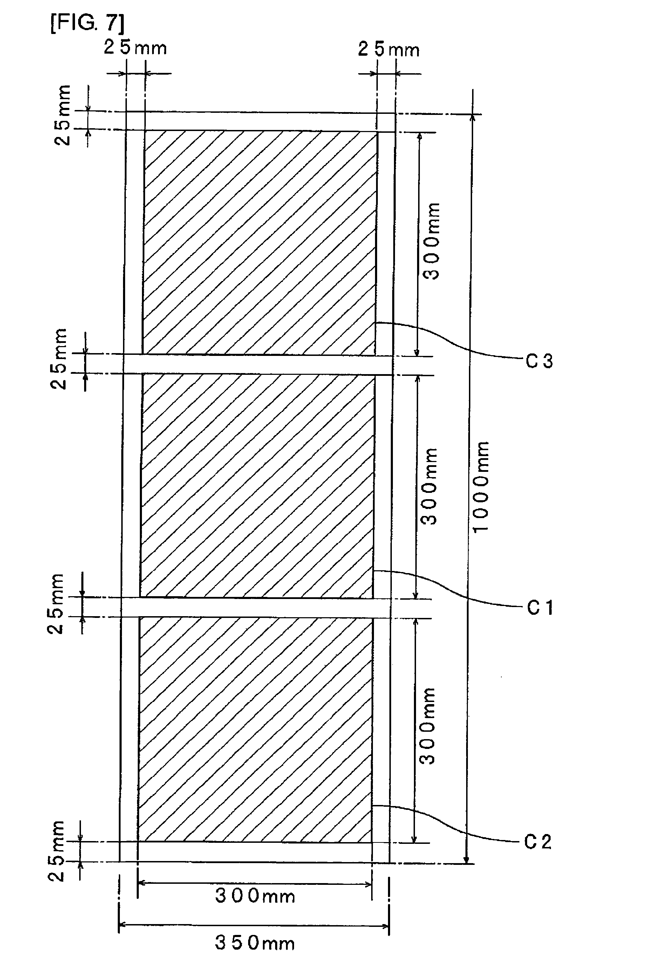

As illustrated in Fig. 7, each intermediate film (1000 mm in length × 350 mm in width) was positioned between two transparent float glasses (300 mm in length × 300 mm in width × 2.5 mm in thickness) in such a manner that a region of 25 to 325 mm from the end on the thin side in the longitudinal direction and a region of 25 to 325 mm from one end in the lateral direction were covered (C2). Similarly, each intermediate film was positioned between two transparent float glasses (300 mm in length × 300 mm in width × 2.5 mm in thickness) in such a manner that a region of 350 to 650 mm from the end on the thin side in the longitudinal direction and a region of 25 to 325 mm from one end in the lateral direction were covered (C1). Each intermediate film was positioned between two transparent float glasses (300 mm in length × 300 mm in width × 2.5 mm in thickness) in such a manner that a region of 675 to 975 mm from the end on the thin side in the longitudinal direction and a region of 25 to 325 mm from one end in the lateral direction were covered (C3). Accordingly, each intermediate film was sandwiched between multiple float glasses and cut out in the shape of a float glass (shaded part in Fig. 7) to give three laminated bodies C1 to C3. The laminated bodies were pre-bonded with a heating roller heated at 230°C. The pre-bonded laminated bodies were pressure-bonded in an autoclave by a heating roller method under conditions of a temperature at 135°C and a pressure at 1.2 MPa for 20 minutes to give three laminated glasses C1 to C3 (300 mm in length × 300 mm in width). The maximum thicknesses of the laminated glasses C1 to C3 are larger in the order of C3>C1>C2.

The surface temperatures of the obtained laminated glasses C1 to C3 (300 mm length × 300 mm width) were adjusted to 23°C. Subsequently, according to JIS R 3212, a rigid sphere having a mass of 2260 g and a diameter of 82 mm was dropped from a height of 4 m on six sheets of each laminated glass. The laminated glass was considered to have passed the test if all the six sheets did not allow the rigid sphere to penetrate therethrough within five seconds after the rigid sphere hit the sheets. The laminated glass was considered to have failed the test if not more than three sheets did not allow the rigid sphere to penetrate therethrough within five seconds after the rigid sphere hit the sheets. In the case of four sheets, another six sheets of the laminated glass were tested on the penetration resistance. In the case of five sheets, another sheet of the laminated glass was tested, and the glass was considered to have passed the test if the other sheet did not allow the rigid sphere to penetrate therethrough within five seconds after the rigid sphere hit the sheet. In the same way, a rigid sphere having a mass of 2260 g and a diameter of 82 mm was dropped from heights of 5 m and 6 m on the center of six sheets of each laminated glass to evaluate the penetration resistance of the laminated glass.

(3) Sound insulation

In Examples 1 to 11 and 22 to 32, the laminated glass C2 (300 mm in length × 300 mm in width) obtained in the evaluation (2) Penetration resistance was vibrated with a vibration generator ("vibrator G21-005D" produced by Shinken Co., Ltd.) for a damping test. The obtained vibration property was amplified by a mechanical impedance amplifier ("XG-81" produced by RION Co., Ltd.) and the vibration spectrum was analyzed by an FET spectrum analyzer ("FET analyzer HP3582A" produced by Yokogawa Hewlett Packard).

A graph showing the relation between sound frequency (Hz) and sound transmission loss (dB) at 20°C was produced from the ratio of loss factor and the resonance frequency of the laminated glass. Based on the graph, the minimum sound transmission loss (TL value) at a sound frequency of around 2000 Hz was obtained. As the TL value is higher, the sound insulation is higher. Evaluation was carried out based on the following criteria.

"○": TL value of not less than 35 dB.
"×"; TL value of less than 35 dB.

Tables 1, 3, and 4 show the results.

(4) Double image

Each laminated glass (1000 mm in length × 300 mm in width) was disposed at a position of a front glass. Display information was reflected on the laminated glass from a display unit installed below the laminated glass. The presence of double image was visually observed at a predetermined position. Evaluation was carried out based on the following criteria.

"○": No double image was observed.
"×": Double images were observed.

Tables 1 to 4 show the results.
Tables 1 to 4 show the results. In Tables 1 to 4, the amount of the plasticizer is the amount (parts by weight) for 100 parts by weight of the PVB resin. With regard to the kind of the plasticizer, 3GO indicates triethylene glycol di-2-ethylhexanoate, DINCH indicates diisononyl cyclohexane-1,2-dicarboxylate, and DOA indicates di-2-ethylhexyl adipate.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| **First surface layer** | Hydroxyl group in PVB resin (mol%) | 30 | 30 | 35 | 22 | 30 | 30 | 30 | 30 | 30 | 30 | 30 |
| | Kind of plasticizer | 3GO | 3GO | 3GO | 3GO | 3GO | 3GO | 3GO | 3GO | 3GO | DINCH | DOA |
| | Amount of plasticizer (parts by weight) | 40 | 40 | 40 | 40 | 25 | 45 | 40 | 40 | 40 | 40 | 40 |
| | Cross-sectional shape in the thickness direction | Wedge shape | Wedge shape | Wedge shape | Wedge shape | Wedge shape | Wedge chape | Wedge shape | Wedge shape | Wedge shape | Wedge shape | Wedge shape |
| | Maximum thickness (μm) | 550 | 950 | 550 | 550 | 550 | 550 | 353 | 650 | 650 | 550 | 550 |
| | Minimum thickness (μm) | 350 | 350 | 350 | 350 | 350 | 350 | 350 | 350 | 350 | 350 | 350 |
| **Intermediate layer** | Hydroxyl group in PVB resign (mol%) | 25 | 25 | 30 | 17 | 25 | 25 | 25 | 25 | 25 | 25 | 25 |
| | Kind of plasticizer | 3GO | 3GO | 3GO | 3GO | 3GO | 3GO | 3GO | 3GO | 3GO | DINCH | DOA |
| | Amount of plasticizer (parts by weight) | 60 | 60 | 60 | 60 | 50 | 50 | 60 | 60 | 60 | 60 | 60 |
| | Cross-sectional shape in the thickness direction | Wedge shape | Rectangular shape | Wedge shape | Wedge shape | Wedge shape | Wedge shape | Wedge shape | Rectangular shape | Rectangular shape | Wedge shape | Wedge shape |
| | Maximum thickness (μm) Minimum thickness (μm) | 300 | 100 | 300 | 300 | 300 | 300 | 104 | 100 | 100 | 300 | 300 |
| | Minimum thickness (μm) | 100 | 100 | 100 | 100 | 100 | 100 | 100 | 100 | 100 | 100 | 100 |

|  |  | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Second surface layer | Hydroxyl group in PVB resin (mol%) | 30 | 30 | 35 | 22 | 30 | 30 | 30 | 30 | 30 | 30 | 30 |
|  | Kind of plasticizer | 3GO | 3GO | 3GO | 3GO | 3GO | 3GO | 3GO | 3GO | 3GO | DINCH | DOA |
|  | Amount of plasticizer (parts by weight) | 40 | 40 | 40 | 40 | 25 | 45 | 40 | 40 | 40 | 40 | 40 |
|  | Cross-sectional shape in the thickness direction | Wedge shape | Rectangular shape | Wedge shape | Wedge shape | Wedge shape | Wedge shape | Wedge shape | Rectangular shape | Rectangular shape | Wedge shape | Wedge shape |
|  | Maximum thickness ($\mu$m) | 550 | 350 | 550 | 550 | 550 | 550 | 353 | 350 | 350 | 550 | 550 |
|  | Minimum thickness ($\mu$m) | 350 | 350 | 350 | 350 | 350 | 350 | 350 | 350 | 350 | 350 | 350 |
| Intermediate film | Cross-sectional shape in the thickness direction | Fig. 3 | Fig. 4 | Fig. 3 | Fig. 3 | Fig. 3 | Fig. 3 | Fig. 3 | Fig. 4 | Fig. 4 | Fig. 3 | Fig. 3 |
|  | Wedge angle $\theta$ (mrad) | 0.6 | 0.6 | 0.6 | 0.6 | 0.6 | 0.6 | 0.01 | 0.3 | 0.3 | 0.8 | 0.8 |
|  | Maximum thickness ($\mu$m) | 1400 | 1400 | 1400 | 1400 | 1400 | 1400 | 810 | 1100 | 1100 | 1400 | 1400 |
|  | Minimum thickness ($\mu$m) | 800 | 800 | 800 | 800 | 800 | 800 | 800 | 800 | 800 | 800 | 800 |

| Evaluation | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| | Moisture content in the thin region (% by weight) | | 0.52 | 0.51 | 0.68 | 0.43 | 0.49 | 0.53 | 0.6 | 0.22 | 0.56 | 0.52 | 0.52 |
| | Moisture content in the thick region (% by weight) | | 0.35 | 0.33 | 0.51 | 0.23 | 0.29 | 0.36 | 0.22 | 0.14 | 0.38 | 0.35 | 0.35 |
| | Moisture content in the thin region/ Moisture content in the thick region | | 1.49 | 1.55 | 1.33 | 1.87 | 1.69 | 1.47 | 2.73 | 1.57 | 1.47 | 1.49 | 1.49 |
| | Penetration resistance Laminated glass C1 | 4m | ○ | ○ | ○ | ○ | ○ | ○ | ○ | ○ | ○ | ○ | ○ |
| | | 5m | ○ | ○ | ○ | ○ | ○ | ○ | ○ | ○ | ○ | ○ | ○ |
| | | 6m | ○ | ○ | ○ | ○ | ○ | ○ | × | ○ | ○ | ○ | ○ |
| | Penetration resistance Laminated glass C2 | 4m | ○ | ○ | ○ | ○ | ○ | ○ | ○ | ○ | ○ | ○ | ○ |
| | | 5m | ○ | ○ | ○ | ○ | ○ | ○ | ○ | ○ | × | ○ | ○ |
| | | 6m | ○ | ○ | ○ | × | ○ | ○ | × | ○ | × | ○ | ○ |
| | Penetration resistance Laminated glass C3 | 4m | ○ | ○ | ○ | ○ | ○ | ○ | ○ | ○ | ○ | ○ | ○ |
| | | 5m | ○ | ○ | ○ | ○ | ○ | ○ | ○ | ○ | ○ | ○ | ○ |
| | | 6m | ○ | ○ | ○ | ○ | ○ | ○ | ○ | ○ | ○ | ○ | ○ |
| | Sound insulation | TL value | ○ | ○ | ○ | ○ | ○ | ○ | ○ | ○ | ○ | ○ | ○ |
| | Double image | | ○ | ○ | ○ | ○ | ○ | ○ | ○ | ○ | ○ | ○ | ○ |

[Table 2]

| | | Example 12 | Example 13 | Example 14 | Example 15 | Example 16 | Example 17 | Example 18 | Example 19 | Example 20 | Example 21 |
|---|---|---|---|---|---|---|---|---|---|---|---|
| Intermediate film | Hydroxyl group in PVB resin (mol%) | 30 | 35 | 22 | 30 | 30 | 30 | 30 | 30 | 30 | 30 |
| | Kind of plasticizer | 3GO | 3GO | 3GO | 3GO | 3GO | 3GO | 3GO | 3GO | DINCH | DOA |
| | Amount of plasticizer (parts by weight) | 40 | 40 | 40 | 25 | 45 | 40 | 40 | 40 | 40 | 40 |
| | Cross-sectional shape in the thickness direction | Wedge shape | Wedge shape | Wedge shape | Wedge shape | Wedge shape | Wedge shape | Wedge shape | Wedge shape | Wedge shape | Wedge shape |
| | Maximum thickness ($\mu$m) | 1400 | 1400 | 1400 | 1400 | 1400 | 810 | 1100 | 1100 | 1400 | 1400 |
| | Minimum thickness ($\mu$m) | 800 | 800 | 800 | 800 | 800 | 800 | 800 | 800 | 800 | 800 |
| | Wedge angle $\theta$ (mrad) | 0.6 | 0.6 | 0.6 | 0.6 | 0.6 | 0.01 | 0.3 | 0.3 | 0.6 | 0.6 |

(continued)

| Evaluation | | | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| | Moisture content in the thin region (% by weight) | | 0.48 | 0.6 | 0.48 | 0.51 | 0.45 | 0.55 | 0.23 | 0.58 | 0.49 | 0.47 |
| | Moisture content in the thick region (% by weight) | | 0.27 | 0.42 | 0.29 | 0.3 | 0.28 | 0.2 | 0.14 | 0.47 | 0.32 | 0.3 |
| | Moisture content in the thin region/Moisture content in the thick region | | 1.78 | 1.43 | 1.66 | 1.70 | 1.61 | 2.75 | 1.64 | 1.23 | 1.53 | 1.57 |
| | Penetration resistance Laminated glass C1 | 4m | ○ | ○ | ○ | ○ | ○ | ○ | ○ | ○ | ○ | ○ |
| | | 5m | ○ | ○ | ○ | ○ | ○ | ○ | ○ | ○ | ○ | ○ |
| | | 6m | ○ | ○ | ○ | ○ | ○ | × | ○ | ○ | ○ | ○ |
| | Penetration resistance Laminated glass C2 | 4m | ○ | ○ | ○ | ○ | ○ | ○ | ○ | ○ | ○ | ○ |
| | | 5m | ○ | ○ | ○ | ○ | ○ | ○ | ○ | × | ○ | ○ |
| | | 6m | ○ | ○ | × | ○ | ○ | × | ○ | × | ○ | ○ |
| | Penetration resistance Laminated glass C3 | 4m | ○ | ○ | ○ | ○ | ○ | ○ | ○ | ○ | ○ | ○ |
| | | 5m | ○ | ○ | ○ | ○ | ○ | ○ | ○ | ○ | ○ | ○ |
| | | 6m | ○ | ○ | ○ | ○ | ○ | ○ | ○ | ○ | ○ | ○ |
| | Double image | | ○ | ○ | ○ | ○ | ○ | ○ | ○ | ○ | ○ | ○ |

[Table 3]

| | | | Example 22 | Example 23 | Example 24 | Example 25 | Example 26 | Example 27 |
|---|---|---|---|---|---|---|---|---|
| First surface layer | | Hydroxyl group in PVB resin (mol%) | 30 | 30 | 35 | 22 | 30 | 30 |
| | | Degree of acetylation of PVB resin (mol%) | 1 | 1 | 1 | 1 | 1 | 1 |
| | | Degree of butylarization of PVB resin (mol%) | 69 | 69 | 64 | 77 | 69 | 69 |
| | | Kind of plasticizer | 3GO | 3GO | 3GO | 3GO | 3GO | 3GO |
| | | Amount of plasticizer (parts by weight) | 40 | 40 | 40 | 40 | 25 | 45 |
| | | Cross-sectional shape in the thickness direction | Wedge shape | Wedge shape | Wedge shape | Wedge shape | Wedge shape | Wedge shape |
| | | Maximum thickness ($\mu$m) | 550 | 950 | 550 | 550 | 550 | 550 |
| | | Minimum thickness ($\mu$m) | 350 | 350 | 350 | 350 | 350 | 350 |
| Intermediate layer | | Hydroxyl group in PVB resin (mol%) | 25 | 25 | 30 | 17 | 25 | 25 |
| | | Degree of acetylation of PVB resin (mol%) | 12 | 12 | 13 | 4 | 12 | 12 |
| | | Degree of butylarization of PVB resin (mol%) | 63 | 83 | 57 | 79 | 63 | 63 |
| | | Kind of plasticizer | 3GO | 3GO | 3GO | 3GO | 3GO | 3GO |
| | | Amount of plasticizer (parts by weight) | 60 | 60 | 60 | 60 | 50 | 50 |
| | | Cross-sectional shape in the thickness direction | Wedge shape | Rectangular shape | Wedge shape | Wedge shape | Wedge shape | Wedge shape |
| | | Maximum thickness ($\mu$m) | 300 | 100 | 300 | 300 | 300 | 300 |
| | | Minimum thickness ($\mu$m) | 100 | 100 | 100 | 100 | 100 | 100 |

|  |  | Example 22 | Example 23 | Example 24 | Example 25 | Example 26 | Example 27 |
|---|---|---|---|---|---|---|---|
| Second surface layer | Hydroxyl group in PVB resin (mol%) | 30 | 30 | 35 | 22 | 30 | 30 |
|  | Degree of acetylation of PVB resin (mol%) | 1 | 1 | 1 | 1 | 1 | 1 |
|  | Degree of butylarization of PVB resin (mol%) | 69 | 69 | 64 | 79 | 69 | 69 |
|  | Kind of plasticizer | 3GO | 3GO | 3GO | 3GO | 3GO | 3GO |
|  | Amount of plasticizer (parts by weight) | 40 | 40 | 40 | 40 | 25 | 45 |
|  | Cross-sectional shape in the thickness direction | Wedge shape | Rectangular shape | Wedge shape | Wedge shape | Wedge shape | Wedge shape |
|  | Maximum thickness ($\mu$m) | 550 | 350 | 550 | 550 | 550 | 550 |
|  | Minimum thickness ($\mu$m) | 350 | 350 | 350 | 350 | 350 | 350 |
| Intermediate film | Cross-sectional shape in the thickness direction | Fig. 3 | Fig.4 | Fig. 3 | Fig.3 | Fig.3 | Fig. 3 |
|  | Wedge angle $\theta$ (mrad) | 0.6 | 0.6 | 0.6 | 0.6 | 0.6 | 0.6 |
|  | Maximum thickness ($\mu$m) | 1400 | 1400 | 1400 | 1400 | 1400 | 1400 |
|  | Minimum thickness ($\mu$m) | 800 | 800 | 800 | 800 | 800 | 800 |

| | | | Example 22 | Example 23 | Example 24 | Example 25 | Example 26 | Example 27 |
|---|---|---|---|---|---|---|---|---|
| Evaluation | Moisture content in the thin region (% by weight) | | 0.52 | 0.51 | 0.68 | 0.43 | 0.49 | 0.53 |
| | Moisture content in the thick region (% by weight) | | 0.35 | 0.33 | 0.51 | 0.23 | 0.29 | 0.36 |
| | Moisture content in the thin region/ Moisture content in the thick region | | 1.49 | 1.55 | 1.33 | 1.87 | 1.69 | 1.47 |
| | Penetration resistance Laminated glass C1 | 4m | ○ | ○ | ○ | ○ | ○ | ○ |
| | | 5m | ○ | ○ | ○ | ○ | ○ | ○ |
| | | 6m | ○ | ○ | ○ | ○ | ○ | ○ |
| | Penetration resistance Laminated glass C2 | 4m | ○ | ○ | ○ | ○ | ○ | ○ |
| | | 5m | ○ | ○ | ○ | ○ | ○ | ○ |
| | | 6m | ○ | ○ | ○ | × | ○ | ○ |
| | Penetration resistance Laminated glass C3 | 4m | ○ | ○ | ○ | ○ | ○ | ○ |
| | | 5m | ○ | ○ | ○ | ○ | ○ | ○ |
| | | 6m | ○ | ○ | ○ | ○ | ○ | ○ |
| | Sound insulation | TL value | ○ | ○ | ○ | ○ | ○ | ○ |
| | Double image | | ○ | ○ | ○ | ○ | ○ | ○ |

[Table 4]

| | | Example 28 | Example 29 | Example 30 | Example 31 | Example 32 |
|---|---|---|---|---|---|---|
| First surface layer | Hydroxyl group in PVB resin (mol%) | 30 | 30 | 30 | 30 | 30 |
| | Degree of acetylation of PVB resin (mol%) | 1 | 1 | 1 | 1 | 1 |
| | Degree of butylarization of PVB resin (mol%) | 69 | 69 | 69 | 69 | 69 |
| | Kind of plasticizer | 3GO | 3GO | 3GO | DINCH | DOA |
| | Amount of plasticizer (parts by weight) | 40 | 40 | 40 | 40 | 40 |
| | Cross-sectional shape in the thickness direction | Wedge shape | Wedge shape | Wedge shape | Wedge shape | Wedge shape |
| | Maximum thickness ($\mu$m) | 353 | 650 | 650 | 550 | 550 |
| | Minimum thickness ($\mu$m) | 350 | 350 | 350 | 350 | 350 |
| Intermediate layer | Hydroxyl group in PVB resin (mol%) | 25 | 25 | 25 | 25 | 25 |
| | Degree of acetylation of PVB resin (mol%) | 12 | 12 | 12 | 12 | 12 |
| | Degree of butylarization of PVB resin (mol%) | 63 | 63 | 63 | 63 | 63 |
| | Kind of plasticizer | 3GO | 3GO | 3GO | DINCH | DOA |
| | Amount of plasticizer (parts by weight) | 60 | 60 | 60 | 60 | 60 |
| | Cross-sectional shape in the thickness direction | Wedge shape | Rectangular shape | Rectangular shape | Wedge shape | Wedge shape |
| | Maximum thickness ($\mu$m) | 104 | 100 | 100 | 300 | 300 |
| | Minimum thickness ($\mu$m) | 100 | 100 | 100 | 100 | 100 |
| Second surface layer | Hydroxyl group in PVB resin (mol%) | 30 | 30 | 30 | 30 | 30 |
| | Degree of acetylation of PVB resin (mol%) | 1 | 1 | 1 | 1 | 1 |
| | Degree at butylarization of PVB resin (mol%) | 69 | 69 | 69 | 69 | 69 |
| | Kind of plasticizer | 3GO | 3GO | 3GO | DINCH | DOA |
| | Amount of plasticizer (parts by weight) | 40 | 40 | 40 | 40 | 40 |
| | Cross-sectional shape in the thickness direction | Wedge shape | Recungular shape | Rectangular shape | Wedge shape | Wedge shape |
| | Maximum thickness ($\mu$m) | 353 | 350 | 350 | 550 | 550 |
| | Minimum thickness ($\mu$m) | 350 | 350 | 350 | 350 | 350 |

(continued)

| | | | Example 28 | Example 29 | Example 30 | Example 31 | Example 32 |
|---|---|---|---|---|---|---|---|
| intermediate film | Cross-sectional shape in the thickness | | Fig. 3 | Fig. 4 | Fig. 4 | Fig. 3 | Fig. 3 |
| | Wedge angle θ (mrad) | | 0.01 | 0.3 | 0.3 | 0.6 | 0.6 |
| | Maximum thickness (μm) | | 810 | 1100 | 1100 | 1400 | 1400 |
| | Minimum thickness (μm) | | 800 | 800 | 800 | 800 | 800 |
| Evaluation | Moisture content in the thin region (% by weight) | | 0.8 | 0.22 | 0.56 | 0.52 | 0.52 |
| | Moisture content in the thick region (% by weight) | | 0.22 | 0.14 | 0.38 | 0.35 | 0.35 |
| | Moisture content in the thin region/ Moisture content in the thick region | | 2.73 | 1.57 | 1.47 | 1.49 | 1.49 |
| | Penetration resistance Laminated glass C1 | 4m | ○ | ○ | ○ | ○ | ○ |
| | | 5m | ○ | ○ | ○ | ○ | ○ |
| | | 6m | × | ○ | ○ | ○ | ○ |
| | Penetration resistance Laminated glass C2 | 4m | ○ | ○ | ○ | ○ | ○ |
| | | 5m | ○ | ○ | × | ○ | ○ |
| | | 6m | × | ○ | × | ○ | ○ |
| | Penetration resistance Laminated glass C3 | 4m | ○ | ○ | ○ | ○ | ○ |
| | | 5m | ○ | ○ | ○ | ○ | ○ |
| | | 6m | ○ | ○ | ○ | ○ | ○ |
| | Sound insulation | TL value | ○ | ○ | ○ | ○ | ○ |
| | Double image | | ○ | ○ | ○ | ○ | ○ |

As shown in Tables 1 to 4, in each of the intermediate films of Examples 1 to 32, the moisture content of the region A1 (region of 100 to 200 mm from the thin end toward the inside of the intermediate film) was higher than the moisture content of the region B1 (region of 100 to 200 mm from the thick end toward the inside of the intermediate film) . In each of the intermediate films of Examples 1 to 32, the moisture content was higher in a thin region than in a thick region with regard to the region other than the region A1 and the region B1. In each of the multilayer intermediate films of Examples 22 to 32, assuming that the distance between the thin first end and the thick second end was represented by X, in each of regions satisfying 0.2X to 0.3X, 0.3X to 0.4X, 0.4X to 0.5X, 0.5X to 0.6X, 0.6X to 0.7X, and 0.7X to 0.8X from the thin first end toward the inside, the moisture content was lower than that of the region satisfying 0.1X to 0.2X and was higher than that of the region satisfying 0.8X to 0.9X (0.1X to 0.2X from the second end toward the inside). In the multilayer intermediate films of Examples 22 to 32, as the thickness was thinner, the moisture content was higher.

## EXPLANATION OF SYMBOLS

| | |
|---|---|
| 1. | Intermediate film |
| 1a. | First end |
| 1b. | Second end |
| 2. | First surface layer |
| 2a. | Outer surface |

| 3. | Second surface layer |
| 3a. | Outer surface |
| 4. | Intermediate layer |
| 11. | Intermediate film |
| 11a. | First end |
| 11b. | Second end |
| 21. | Laminated glass |
| 22. | First component for laminated glass |
| 23. | Second component for laminated glass |
| 51, 61, 71. | Intermediate film |
| 51a, 61a, 71a. | First end |
| 51b, 61b, 71b. | Second end |
| 52, 53, 62, 63, 72, 73 | First surface layer and Second surface layer |
| 54, 64, 74 | Intermediate layer |
| 74a, 74b. | First intermediate layer and Second intermediate layer |

## Claims

1. An intermediate film for laminated glass comprising:

   a first end and a second end, the first end being thinner than the second end; and
   a thin region and a thick region, the thin region having a moisture content of more than one time but not more than three times the moisture content of the thick region,
   wherein the intermediate film contains a thermoplastic resin and a plasticizer, wherein the thermoplastic resin is a polyvinyl acetal resin,
   wherein a distance between the first end and the second end is represented by X, the thin region is a region satisfying 0.1X to 0.2X from the first end toward an inside, and the thick region is a region satisfying 0.1X to 0.2X from the second end toward the inside,
   wherein the thin region has a moisture content of 0.15% to 0.8% by weight.

2. The intermediate film for laminated glass according to Claim 1,
   wherein the thin region has a moisture content of 0.2% to 0.7% by weight.

3. The intermediate film for laminated glass according to Claim 1 or 2 including
   a first surface layer,
   a second surface layer, and
   an intermediate layer provided between the first surface layer and the second surface layer.

4. The intermediate film for laminated glass according to Claim 3,
   wherein the first surface layer and the second surface layer each contain the polyvinyl acetal resin and the plasticizer,
   the intermediate layer contains a polyvinyl acetal resin and a plasticizer, and
   the amount of a hydroxyl group in the polyvinyl acetal resin contained in each of the first surface layer and the second surface layer is higher than the amount of a hydroxyl group in the polyvinyl acetal resin contained in the intermediate layer.

5. The intermediate film for laminated glass according to Claim 4,
   wherein the amount of hydroxyl groups in the polyvinyl acetal resin contained in each of the first surface layer and the second surface layer is higher than the amount of hydroxyl groups in the polyvinyl acetal resin contained in the intermediate layer by at least 1 mol%.

6. The intermediate film for laminated glass according to Claim 4 or 5,
   wherein the amount of hydroxyl groups in the polyvinyl acetal resin contained in each of the first surface layer and the second surface layer is 20 to 38 mol%.

7. The intermediate film for laminated glass according to any one of Claims 4 to 6,
   wherein the intermediate layer has a plasticizer content for 100 parts by weight of the polyvinyl acetal resin higher than a plasticizer content for 100 parts by weight of the polyvinyl acetal resin of each of the first surface layer and the second surface layer.

8. The intermediate film for laminated glass according to Claim 7,
wherein the intermediate layer has a plasticizer content for 100 parts by weight of the polyvinyl acetal resin higher than the plasticizer content for 100 parts by weight of the polyvinyl acetal resin of each of the first surface layer and the second surface layer by at least 5 parts by weight.

9. The intermediate film for laminated glass according to Claim 7 or 8,
wherein the intermediate layer has a plasticizer content for 100 parts by weight of the polyvinyl acetal resin of 45 to 75 parts by weight, and
the first surface layer and the second surface layer each have a plasticizer content for 100 parts by weight of the polyvinyl acetal resin of 20 to 50 parts by weight.

10. The intermediate film for laminated glass according to any one of Claims 1 to 9,
which has a wedge-shaped cross section in a thickness direction.

11. A laminated glass comprising:

a first component for laminated glass;
a second component for laminated glass; and
an intermediate film sandwiched between the first component for laminated glass and the second component for laminated glass, wherein the intermediate film includes the intermediate film for laminated glass according to any one of Claims 1 to 10.

**Patentansprüche**

1. Zwischenschichtfolie für Verbundglas, umfassend
ein erstes Ende und ein zweites Ende, wobei das erste Ende dünner ist als das zweite Ende; und
einen dicken Bereich und einen dünnen Bereich, wobei der dünne Bereich einen Feuchtigkeitsgehalt von mehr als dem Einfachen, jedoch nicht mehr als dem Dreifachen des Feuchtigkeitsgehaltes des dicken Bereichs besitzt,
wobei die Zwischenschichtfolie ein thermoplastisches Harz und einen Weichmacher enthält, wobei das thermoplastische Harz ein Polyvinylacetalharz ist,
wobei ein Abstand zwischen dem ersten Ende und dem zweiten Ende durch X wiedergegeben wird, der dünne Bereich ein Bereich ist, welcher 0,1 X bis 0,2 X genügt, vom ersten Ende aus in Richtung einer Innenseite, und der dicke Bereich ein Bereich ist, welcher 0,1 X bis 0,2 X genügt, von dem zweiten Ende aus zu der Innenseite,
wobei der dünne Bereich einen Feuchtigkeitsgehalt von 0,15 bis 0,8 Gew.-% aufweist.

2. Zwischenschichtfolie für Verbundglas nach Anspruch 1, wobei der dünne Bereich einen Feuchtigkeitsgehalt von 0,2 bis 0,7 Gew.-% aufweist.

3. Zwischenschichtfolie für Verbundglas nach Anspruch 1 oder 2, beinhaltend
eine erste Oberflächenschicht,
eine zweite Oberflächenschicht, und
eine Zwischenschicht, welche zwischen der ersten Oberflächenschicht und der zweiten Oberflächenschicht vorgesehen ist.

4. Zwischenschichtfolie für Verbundglas nach Anspruch 3,
wobei die erste Oberflächenschicht und die zweite Oberflächenschicht jeweils das Polyvinylacetalharz und den Weichmacher enthalten,
die Zwischenschicht ein Polyvinylacetalharz und einen Weichmacher enthält, und
die Menge an einer Hydroxylgruppe in dem Polyvinylacetalharz, das in jeder der ersten Oberflächenschicht und der zweiten Oberflächenschicht enthalten ist, höher ist als die Menge an einer Hydroxylgruppe in dem Polyvinylacetalharz, das in der Zwischenschicht enthalten ist.

5. Zwischenschichtfolie für Verbundglas nach Anspruch 4,
wobei die Menge an Hydroxylgruppen in dem Polyvinylacetalharz, das in jeder der ersten Oberflächenschicht und der zweiten Oberflächenschicht enthalten ist, um mindestens 1 Mol% höher ist, als die Menge an Hydroxylgruppen in dem Polyvinylacetalharz, das in der Zwischenschicht enthalten ist.

6. Zwischenschichtfolie für Verbundglas nach Anspruch 4 oder 5,
wobei die Menge an Hydroxylgruppen in dem Polyvinylacetalharz, das in jeder der ersten Oberflächenschicht und der zweiten Oberflächenschicht enthalten ist, 20 bis 38 Mol% beträgt.

7. Zwischenschichtfolie für Verbundglas nach mindestens einem der Ansprüche 4 bis 6,
wobei die Zwischenschichtfolie einen Weichmachergehalt aufweist, der, bezogen auf 100 Gewichtsteile des Polyvinylacetalharzes, höher ist als der Weichmachergehalt, bezogen auf 100 Gewichtsteile des Polyvinylacetalharzes, jeder der ersten Oberflächenschicht und der zweiten Oberflächenschicht.

8. Zwischenschichtfolie für Verbundglas nach Anspruch 7,
wobei die Zwischenschicht einen Weichmachergehalt aufweist, der, bezogen auf 100 Gewichtsteile des Polyvinylacetalharzes, um mindestens 5 Gewichtsteile höher ist als der Weichmachergehalt, bezogen auf 100 Gewichtsteile des Polyvinylacetalharzes, jeder der ersten Oberflächenschicht und der zweiten Oberflächenschicht.

9. Zwischenschichtfolie für Verbundglas nach Anspruch 7 oder 8,
wobei die Zwischenschicht einen Weichmachergehalt von 45 bis 75 Gewichtsteilen, bezogen auf 100 Gewichtsteile des Polyvinylacetalharzes, aufweist, und
die erste Oberflächenschicht und die zweite Oberflächenschicht jeweils einen Weichmachergehalt von 20 bis 50 Gewichtsteilen, bezogen auf 100 Gewichtsteile des Polyvinylacetalharzes, aufweisen.

10. Zwischenschichtfolie für Verbundglas nach mindestens einem der Ansprüche 1 bis 9, welche in Dickenrichtung einen keilförmigen Querschnitt besitzt.

11. Verbundglas, umfassend:

eine erste Komponente für Verbundglas;
eine zweite Komponente für Verbundglas; und
eine Zwischenschichtfolie, die zwischen der ersten Komponente für Verbundglas und der zweiten Komponente für Verbundglas eingefügt ist, wobei die Zwischenschichtfolie die Zwischenschichtfolie für Verbundglas gemäß mindestens einem der Ansprüche 1 bis 10 beinhaltet.

**Revendications**

1. Film intermédiaire pour verre stratifié comprenant :

une première extrémité et une seconde extrémité, la première extrémité étant plus fine que la seconde extrémité ; et
une région fine et une région épaisse, la région fine ayant une teneur en humidité de plus d'une mais de moins de trois fois la teneur en humidité de la région épaisse,
le film intermédiaire contenant une résine thermoplastique et un plastifiant, la résine thermoplastique étant une résine de polyvinylacétal,
une distance entre la première extrémité et la seconde extrémité est représentée par X, la région fine est une région satisfaisant 0,1X à 0,2X de la première extrémité vers l'intérieur, et la région épaisse est une région satisfaisant 0,1X à 0,2X de la seconde extrémité vers l'intérieur,
la région fine ayant une teneur en humidité de 0,15 % à 0,8 % en poids.

2. Film intermédiaire pour verre stratifié selon la revendication 1,
dans lequel la région fine a une teneur en humidité de 0,2 % à 0,7 % en poids.

3. Film intermédiaire pour verre stratifié selon la revendication 1 ou 2, comprenant
une première couche de surface,
une seconde couche de surface, et
une couche intermédiaire fournie entre la première couche de surface et la seconde couche de surface.

4. Film intermédiaire pour verre stratifié selon la revendication 3,

dans lequel la première couche de surface et la seconde couche de surface contiennent chacune la résine de polyvinylacétal et le plastifiant,
la couche intermédiaire contient une résine de polyvinylacétal et un plastifiant, et
la quantité de groupes hydroxyle dans la résine de polyvinylacétal contenue dans chacune de la première couche de surface et de la seconde couche de surface est supérieure à la quantité de groupes hydroxyle dans la résine de polyvinylacétal contenue dans la couche intermédiaire.

5.  Film intermédiaire pour verre stratifié selon la revendication 4,
    dans lequel la quantité de groupes hydroxyle dans la résine de polyvinylacétal contenue dans chacune de la première couche de surface et de la seconde couche de surface est supérieure à la quantité de groupes hydroxyle dans la résine de polyvinylacétal contenue dans la couche intermédiaire par au moins 1 % en moles.

6.  Film intermédiaire pour verre stratifié selon la revendication 4 ou 5,
    dans lequel la quantité de groupes hydroxyle dans la résine de polyvinylacétal contenue dans chacune de la première couche de surface et de la seconde couche de surface est de 20 à 80 % en moles.

7.  Film intermédiaire pour verre stratifié selon l'une quelconque des revendications 4 à 6,
    dans lequel la couche intermédiaire a une teneur en plastifiant pour 100 parties en poids de la résine de polyvinylacétal supérieure à la teneur en plastifiant pour 100 parties en poids de la résine de polyvinylacétal de chacune de la première couche de surface et de la seconde couche de surface.

8.  Film intermédiaire pour verre stratifié selon la revendication 7,
    dans lequel la couche intermédiaire a une teneur en plastifiant pour 100 parties en poids de la résine de polyvinylacétal supérieure à la teneur en plastifiant pour 100 parties en poids de la résine de polyvinylacétal de chacune de la première couche de surface et de la seconde couche de surface par au moins 5 parties en poids.

9.  Film intermédiaire pour verre stratifié selon la revendication 7 ou 8,
    dans lequel la couche intermédiaire a une teneur en plastifiant pour 100 parties en poids de la résine de polyvinylacétal de 45 à 75 parties en poids, et
    la première couche de surface et la seconde couche de surface ont chacune une teneur en plastifiant pour 100 parties en poids de la résine de polyvinylacétal de 20 à 50 parties en poids.

10. Film intermédiaire pour verre stratifié selon l'une quelconque des revendications 1 à 9,
    qui a une section transversale en forme de coin dans le sens de l'épaisseur.

11. Verre stratifié comprenant :

    un premier composant pour verre stratifié ;
    un second composant pour verre stratifié ; et
    un film intermédiaire intercalé entre le premier composant pour verre stratifié et le second composant pour verre stratifié, le film intermédiaire comprenant le film intermédiaire pour verre stratifié selon l'une quelconque des revendications 1 à 10.

[FIG. 1]
(a)

(b)

[FIG. 2]

[FIG. 3]

[FIG. 4]

[FIG. 5]

[FIG. 6]

Parameters: 2

[FIG. 7]